(19) Europäisches Patentamt
European Patent Office
Office européen des brevets

(11) Veröffentlichungsnummer: **0 254 110 B1**

(12) # EUROPÄISCHE PATENTSCHRIFT

(45) Veröffentlichungstag der Patentschrift: **16.10.91**

(51) Int. Cl.5: **C08L 23/30**, C03C 17/32

(21) Anmeldenummer: **87109664.0**

(22) Anmeldetag: **04.07.87**

(54) **Wässrige Polyethylendispersionen, ihre Herstellung und Verwendung zur Vergütung von Glasoberflächen.**

(30) Priorität: **19.07.86 DE 3624546**

(43) Veröffentlichungstag der Anmeldung:
**27.01.88 Patentblatt 88/04**

(45) Bekanntmachung des Hinweises auf die Patenterteilung:
**16.10.91 Patentblatt 91/42**

(84) Benannte Vertragsstaaten:
**AT BE CH DE ES FR GB IT LI LU NL SE**

(56) Entgegenhaltungen:
**DE-A- 3 324 390**
**FR-A- 1 175 262**
**GB-A- 1 068 899**
**US-A- 4 272 587**

(73) Patentinhaber: **Th. Goldschmidt AG**
**Goldschmidtstrasse 100 Postfach 101461**
**W-4300 Essen 1(DE)**

(72) Erfinder: **Ruf, Erich, Dr.**
**Auf'm Gartenstück 10**
**W-4300 Essen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Dispersionen von insbesondere anoxidiertem Polyethylen, Verfahren zur Herstellung derartiger Dispersionen sowie die Verwendung solcher Dispersionen zur Vergütung von Glasoberflächen, insbesondere von Metalloxidschichten aufweisenden Glasoberflächen.

Die Festigkeit von Glas hängt von der Unversehrtheit der Glasoberfläche ab. Unmittelbar nach Herstellung des Glases ist seine Festigkeit am höchsten. Die Festigkeit sinkt jedoch, wenn die Glasoberflächen Kratzer oder Schrammen aufweisen. Es sind deshalb zahlreiche Verfahren bekannt, die Oberflächen von Gegenständen aus Glas gegen mechanische Beschädigungen zu schützen.

So ist es bekannt, Glasgegenstände direkt nach ihrer Formgebung bei Temperaturen zwischen etwa 370 und 750°C mit anorganischen und/oder organischen Verbindungen, insbesondere des Titans, Zinns oder Zirkons, zu behandeln (sogenannte Heißendvergütung). Dabei entstehen auf den Oberflächen der heißvergüteten Glasgegenstände dünne, farblose, transparente Metalloxidüberzüge.

Zur weiteren Erhöhung der Ritzhärte und der Festigkeit von Glasgegenständen sowie zur Verbesserung ihrer Gleitfähigkeit ist es bekannt, auf die mit Metalloxiden vergüteten Glasgegenstände noch einen organischen Überzug aufzubringen (sogenannte Kaltendvergütung).

So ist in der DE-PS 12 91 448 ein Verfahren zur Erhöhung der Ritzhärte und Festigkeit von Glasgegenständen, insbesondere Glasflaschen, durch Erzeugung eines dünnen, farblosen, durchsichtigen Überzuges auf den Außenflächen der Glasgegenstände beschrieben, dessen Merkmal darin besteht, daß auf die Glasgegenstände aufgebrachte dünne Schichten eines pyrolysierbaren anorganischen Salzes oder einer pyrolysierbaren organischen Verbindung des Titans, Zirkoniums, Zinns oder Vanadiums auf den Glasgegenständen bei Temperaturen zwischen 370 und 705°C pyrolytisch zu den entsprechenden Metalloxiden zersetzt, die Glasgegenstände auf Temperaturen zwischen 230 und 65,5°C abgekühlt und auf noch heißen Glasoberflächen ein Olefinpolymerisat, ein Polyurethan, ein Polystyrol oder ein Essigsäuresalz eines Alkylamins aufgesprüht werden. Beispiel eines Olefinpolymerisates ist ein Polyethylenwachs niedrigen Molekulargewichts, welches in Form einer wäßrigen Emulsion verwendet wird. Als Emulgator dient das Alkalimetallsalz einer Fettsäure, insbesondere Kaliumoleat. Die Dicke des Überzuges auf dem Glasgegenstand beträgt etwa 1 µm. Diese Filme aus Polyethylenwachs sind jedoch nicht waschlaugenbeständig und werden bei einer Reinigung des Behälters nach verhältnismäßig kurzer Zeit durch die waschaktiven Substanzen der Reinigungsflotte abgelöst.

Aus der DE-PS 24 12 068 ist ein mit Metalloxid, insbesondere Zinnoxid, und darauf mit einer unlöslichen organischen Verbindung überzogener Glasbehälter bekannt, welcher eine zwischen diesen beiden Überzügen liegende Zwischenschicht aus einer Fettsäure aufweist. Die Vergütung des Glasbehälters kann entsprechend dieser Patentschrift dadurch erfolgen, daß zunächst der Glasbehälter in einer Heißendbehandlung mit einem Metalloxid, insbesondere Zinnoxid, überzogen wird, daß auf den Metalloxidüberzug Fettsäure aufgebracht wird, während sich der Behälter auf einer Temperatur von 90 bis 130°C befindet und daß dann ein unlöslicher organischer Überzug aufgebracht wird, während sich der Behälter auf einer Temperatur von 90 bis 150°C befindet. Dabei kann als Fettsäure Ölsäure verwendet werden. Der unlösliche organische Überzug besteht vorzugsweise aus Polyethylen. Durch die aus der Fettsäure gebildete Zwischenschicht soll die Alkalibeständigkeit erhöht werden. Das Polyethylen selbst wird in Form einer Polyethylenemulsion aufgebracht, welche als Emulgator Kaliumoleat enthält. Die Beständigkeit dieser unlöslichen organischen Überzüge gegenüber dem Angriff heißer, alkalischer Waschflotten ist aber noch immer ungenügend. Das Verfahren ist außerdem durch die Notwendigkeit des Aufbringens dreier Schichten technisch aufwendig und nachteilig. Die Verwendung von Alkalisalzen von Fettsäuren als Emulgatoren hat generell den Nachteil der Instabilität der Polyethylendispersionen gegenüber den Härtebildnern des Wassers.

Der vorliegenden Erfindung liegt die Aufgabe zugrunde, wäßrige Polyethylendispersionen aufzufinden, welche sich in besonderer Weise zur Vergütung von Glasoberflächen, wie z.B. der äußeren Oberfläche von Glasflaschen, eignen, indem sie die Kratzfestigkeit und Glätte der Glasgegenstände erhöhen und gegenüber dem Angriff von wäßrigen Reinigungsflotten eine erhöhte Beständigkeit aufweisen. Die Dispersionen sollen gute Feinteiligkeit und hohe Stabilität der dispergierten Teilchen besitzen.

Diese Eigenschaften sind überraschenderweise bei wäßrigen Dispersionen von insbesondere anoxidiertem Polyethylen zu finden, welche gekennzeichnet sind durch einen Gehalt von 40 bis 100 Gew.-%, bezogen auf Polyethylen, eines Gemisches aus

a) Aminoxiden der allgemeinen Formel

$$R^1CONH(CH_2)_nN(CH_3)_2 \quad \text{I}$$
$$\downarrow$$
$$O$$

$R^1$ = Alkylrest mit 7 bis 17 Kohlenstoffatomen,
n = 2 oder 3 und

b) dem Salz eines Amins der allgemeinen Formel

$R^2N\,[(C_2H_4O)_mH]_2$ II

mit einer physiologisch unbedenklichen Carbonsäure,
$R^2$ = Alkylrest mit 8 bis 18 Kohlenstoffatomen,
Summe der Einheiten m = 20 bis 100,
wobei die Bestandteile a) und b) in einem Gewichtsverhältnis von 4 : 1 bis 1 : 1 vorliegen.

Als Polyethylen wird vorzugsweise ein Polyethylen mit einem Molekulargewicht im Bereich von 500 bis 10 000 verwendet. Vorzugsweise ist das Polyethylen anoxidiert. Insbesondere bevorzugt ist ein anoxidiertes Polyethylen mit einem Tropfpunkt von 100 bis 105° C, einer Säurezahl von 20 bis 40, einer Verseifungszahl von 20 bis 70, insbesondere 40 bis 60.

Von erfindungswesentlicher Bedeutung ist der Gehalt der Dispersion an den Komponenten a) und b). Die Verbindungen sind als solche bekannt. Sie wurden aber noch nicht für den genannten Verwendungszweck empfohlen. Ebenso war die Kombination der beiden Verbindungen noch nicht bekannt.

Die Komponente a) wird durch ein Aminoxid der Formel

$$R^1CONH(CH_2)_nN(CH_3)_2 \quad \text{I}$$
$$\downarrow$$
$$O$$

gebildet. $R^1$ ist ein Alkylrest mit 7 bis 17 Kohlenstoffatomen. Der Alkylrest entspricht dabei dem Alkylrest einer im allgemeinen natürlich vorkommenden Fettsäure mit 8 bis 18 Kohlenstoffatomen. Die Alkylreste $R^1$ können auch in Form eines Gemisches verschiedener Alkylreste vorliegen, welche im Mittel 7 bis 17 Kohlenstoffatome aufweisen.

Der Index n hat einen Zahlenwert von 2 oder 3, vorzugsweise von 3.

Das Aminoxid der Formel I kann durch Umsetzung einer Fettsäure oder eines Fettsäuregemisches bzw. des Esters der Fettsäure mit Dimethylaminoethylamin bzw. Dimethylaminopropylamin und nachfolgende Oxidation des Amidamins mit Wasserstoffperoxidlösung in an sich bekannter Weise hergestellt werden.

Die Komponente b) besteht aus dem Salz eines Amins der allgemeinen Formel

$R^2N\,[(C_2H_4O)_mH]_2$ II

wobei der Rest $R^2$ dem Rest $R^1$ entspricht, jedoch nicht mit diesem identisch sein muß. Die Summe der Einheiten m beträgt 20 bis 100. Als physiologisch unbedenkliche Carbonsäure eignet sich insbesondere Essigsäure.

Die Komponente b) kann in ebenfalls an sich bekannter Weise dadurch hergestellt werden, daß man an das Alkylamin $R^2NH_2$ Ethylenoxid anlagert, bis die Summe der angelagerten Ethylenoxideinheiten 20 bis 100 beträgt und das erhaltene Produkt mit mindestens äquivalenten Mengen Essigsäure umsetzt.

Die Komponenten a) und b) liegen in einem Gewichtsverhältnis von 4 : 1 bis 1 : 1 vor, bevorzugt sind Gewichtsverhältnisse von 2 : 1 bis 1,3 : 1.

Die erfindungsgemäßen Dispersionen enthalten, bezogen auf Polyethylen, 40 bis 100 Gew.-% des Gemisches der Komponenten a) und b). Vorzugsweise enthalten die Dispersionen 45 bis 60 Gew.-% des Gemisches der Komponenten a) und b). Der Gehalt an Polyethylen in der Dispersion beträgt 1 bis 40 Gew.-%, vorzugsweise 10 bis 25 Gew.-%.

Ein weiterer Gegenstand der Erfindung besteht in dem Verfahren zur Herstellung der Dispersionen. Dieses Verfahren ist dadurch gekennzeichnet, daß man in die vorgelegte, auf 70 bis 95° C erwärmte

Lösung der Komponente a) in der erforderlichen Menge Wasser die die Komponente b) enthaltende Schmelze des Polyethylens unter intensivem Rühren zugibt und die erhaltene Dispersion unter weiterem Rühren abkühlt. Vorzugsweise sollen die Dispersionen mit einer Geschwindigkeit von 1 bis 5 °C/Min. abgekühlt werden. Besonders bevorzugt ist eine Abkühlungsgeschwindigkeit von 1 bis 2 °C/Min.

Die erfindungsgemäßen Dispersionen lassen sich auf Glasgegenstände, die eine Oberflächentemperatur von 80 bis 150 °C aufweisen in an sich bekannter Weise durch Sprühzerstäubung oder Tauchen aufbringen. Vorzugsweise wird die Vergütung im Anschluß an eine Heißendvergütung vorgenommen. Die erhaltenen Polyethylenüberzüge haften hervorragend auf den Glasoberflächen und weisen eine hohe Beständigkeit gegen heiße, wäßrige Waschflotten auf. Die erhaltenen Polyethylenüberzüge halten mehr als zehn Reinigungsvorgänge mit 2 %iger Natronlauge, welche ca. 30 Minuten bei 80 °C auf die Oberfläche einwirkt, aus, ohne daß die über die Heißendvergütung aufgebrachte Metalloxidschicht wesentlich angegriffen wird. Dies ist mit den aus dem Stand der Technik bekannten Polyethylendispersionen nicht in gleichem Maße möglich. Es wird vermutet, daß durch den Gehalt der erfindungsgemäßen Dispersionen an Aminderivaten der Formel I und II die Dispersionen eine gewisse Substantivität aufweisen, welche die bisher verwendeten Polyethylendispersionen, welche Alkalisalze von Fettsäuren oder nichtionogene Ethylenoxidderivate von Alkylphenolen oder Fettalkoholen als Emulgator aufweisen, nicht besitzen.

In dem folgenden Beispiel werden die Herstellung einer erfindungsgemäßen Dispersion und ihre Verwendung für die Oberflächenvergütung von Glas noch näher erläutert.

In einem 4-l-Glaskolben mit Rührer, Thermometer, Rückflußkühler und beheizbarem Tropftrichter werden 1531,1 g Wasser und 86,5 g der Verbindung der allgemeinen Formel I

$$R^1CONH(CH_2)_n\underset{\displaystyle O}{\underset{\downarrow}{N}}(CH_3)_2$$

wobei $R^1$ ein Gemisch von Alkylresten entsprechend der Kokosfettsäure und n = 3 ist, vorgelegt.

In einem 1-l-Becherglas werden 320 g anoxidiertes Polyethylen mit einer Verseifungszahl von 40 bis 60 bei 135 bis 145 °C aufgeschmolzen. In dieser Schmelze werden 62,4 g des Salzes eines Amins der allgemeinen Formel II

$$R^2N\,[(C_2H_4O)_mH]_2$$

zugegeben, welches dadurch erhalten worden ist, daß man an ein von der Kokosfettsäure abgeleitetes Kokosfettamin 50 Mol Ethylenoxid angelagert und 100 Gew.-Teile dieses Produktes mit 8 Gew.-Teilen Essigsäure versetzt hat.

Die Schmelze wird etwa 5 bis 10 Minuten gerührt und in einen beheizten Tropftrichter gegeben. Aus diesem Tropftrichter wird die Schmelze der 90 bis 95 °C warmen, wäßrigen Lösung der Komponente a) unter intensivem Rühren zugefügt. Nach erfolgter Zugabe wird noch 10 Minuten nachgerührt und die erhaltene Dispersion mit einer Geschwindigkeit von 1 bis 2 °C/Min. abgekühlt. Es werden 2000 g Polyethylendispersion erhalten, welche 16 Gew.-% Polyethylen dispergiert enthält.

Zum Nachweis der überlegenen Eigenschaften der so erhaltenen erfindungsgemäßen Dispersion (Dispersion 1) wird der folgende Vergleichsversuch mit einer handelsüblichen Polyethylendispersion, die mit nichtionogenen Emulgatoren hergestellt ist (Dispersion 2), durchgeführt.

Zunächst werden zwei Gruppen von je 20 Bierflaschen mit Monobutylzinntrichlorid entsprechend dem Stand der Technik heißvergütet, bis sie eine Belegung von 60 ctu (coating thickness unit) aufweisen. Jeweils eine Gruppe von 20 Flaschen wird anschließend mit der erfindungsgemäßen Dispersion 1 bzw. der Vergleichsdispersion 2, die beide vorher mit deionisiertem Wasser im Verhältnis 1 : 50 verdünnt worden waren, bei einer Flaschentemperatur von 120 °C eingesprüht. Man läßt dann die Beschichtung trocknen. Es bildet sich ein dünner Film auf der Glasoberfläche.

Die Flaschen werden nun mit 2 %iger wäßriger NaOH-Lösung bei 80 °C 30 Minuten gewaschen.

Nach 3, 6 und 10 Wäschen wird die jeweils noch vorhandene Zinnoxidschicht mit einem Hot End Coating Meter bestimmt. Dabei werden die ctu-Werte der verbliebenen Schicht verschleißfrei gemessen. Hierdurch läßt sich feststellen, inwieweit der Polyethylenfilm in der Lage ist, trotz mehrmaliger Waschvorgänge die Zinnoxidschicht vor dem Angriff von Natronlauge zu schützen.

Nach 10 Wäschen wird mittels des Scratch Resistance Testers bestimmt, ab welchem Druck die Flaschen bei gegenseitiger Reibung Kratzer oder andere Oberflächenstörungen zeigen.

| | Dispersion 1 (erfindungsgemäß) | Dispersion 2 (Vergleich) |
|---|---|---|
| | Dicke der Zinnoxidschicht in ctu | |
| Ausgangswert | 60 | 60 |
| nach 3 Wäschen | 55 | 40 |
| nach 6 Wäschen | 50 | 10 |
| nach 10 Wäschen | 30 | 0 |
| Scratch Resistance Testwerte nach 10 Wäschen | 15 kg | < 0,5 kg |

Wie diese Versuche zeigen, ist die erfindungsgemäße Polyethylendispersion 1 in der Lage, neben einer sehr guten Glätte auch nach 10 Wäschen noch einen deutlichen Schutz für die Heißendvergütung zu bieten, während dies bei der Vergleichsdispersion 2 nicht mehr der Fall ist. Dieser Schutz der Heißendvergütung ist wichtig, da die Heißendvergütung die Zugfestigkeit der Glasoberfläche und damit die Bruchfestigkeit der Glasbehältnisse (Erhöhung des Berstdruckes) gegenüber nicht heißendvergüteten Glasbehältnissen wesentlich verbessert.

**Patentansprüche**

1. Wäßrige Dispersionen von insbesondere anoxidiertem Polyethylen, gekennzeichnet durch einen Gehalt von 40 bis 100 Gew.-%, bezogen auf Polyethylen, eines Gemisches aus

   a) Aminoxiden der allgemeinen Formel

$$R^1CONH(CH_2)_n\underset{\downarrow\atop O}{N}(CH_3)_2$$

   $R^1$ = Alkylrest mit 7 bis 17 Kohlenstoffatomen,
   n = 2 oder 3 und

   b) dem Salz eines Amins der allgemeinen Formel

   $R^2N[(C_2H_4O)_mH]_2$

   mit einer physiologisch unbedenklichen Carbonsäure,

   $R^2$ = Alkylrest mit 8 bis 18 Kohlenstoffatomen,
   Summe der Einheiten m = 20 bis 100,

   wobei die Bestandteile a) und b) in einem Gewichtsverhältnis von 4 : 1 bis 1 : 1 vorliegen.

2. Verfahren zur Herstellung der Dispersionen nach Anspruch 1, dadurch gekennzeichnet, daß man in die vorgelegte, auf 70 bis 95 °C erwärmte Lösung der Komponente a) in der erforderlichen Menge Wasser die die Komponente b) enthaltende Schmelze des Polyethylens unter intensivem Rühren zugibt und die erhaltene Dispersion unter weiterem Rühren abkühlt.

3. Verwendung der Dispersionen nach Anspruch 1 zur Vergütung von Glasoberflächen, insbesondere von Metalloxidschichten aufweisenden Glasoberflächen.

**Claims**

1. Aqueous dispersions of, in particular, partially oxidised polyethylene, characterised by a content of from 40 to 100% by weight, based on polyethylene, of a mixture of
   a) amine oxides of the general formula

$$R^1CONH(CH_2)_nN(CH_3)_2 \atop \quad\quad\quad\quad\quad\downarrow O$$

   in which
   $R^1$ is an alkyl radical having 7 to 17 carbon atoms, and
   n is 2 or 3, and
   b) the salt, with a physiologically acceptable carboxylic acid, of an amine of the general formula

   $R^2N[(C_2H_4)_mH]_2$

   in which
   $R^2$ is an alkyl radical having 8 to 18 carbon atoms, and
   the total number of units m is 20 to 100,
   the constituents a) and b) being present in a weight ratio of from 4:1 to 1:1.

2. Process for the preparation of the dispersions according to Claim 1, characterised in that the polyethylene melt containing component b) is added with vigorous stirring to the solution of component a), warmed to 70 to 95° C, in the necessary amount of water, and the resultant dispersion is cooled with further stirring.

3. Use of the dispersions according to Claim 1 for coating glass surfaces, in particular glass surfaces having metal oxide coatings.

**Revendications**

1. Dispersions aqueuses, en particulier de polyéthylène ayant subi un commencement d'oxydation, caractérisées en ce qu'elles contiennent 40 à 100 % en poids, par rapport au polyéthylène, d'un mélange formé
   a) d'oxydes d'amines de formule générale

$$R^1CONH(CH_2)_nN(CH_3)_2 \atop \quad\quad\quad\quad\quad\downarrow O$$

   $R^1$ = radical alcoyle comportant 7 à 17 atomes de carbone,
   n = 2 ou 3 ; et

   b) du sel d'une amine de formule générale

   $R^2N[(C_2H_4O)_mH]_2$

   avec un acide carboxylique physiologiquement neutre,
   $R^2$ = radical alcoyle comportant 8 à 18 atomes de carbone,
   somme des unités m = 20 à 100,
   dans lequel le rapport en poids des composants a) et b) est compris entre 4 : 1 et 1 : 1.

2. Procédé de préparation des dispersions selon la revendication 1, caractérisé en ce qu'on ajoute à la solution du composant a) préparée et chauffée à une température comprise entre 70 et 95° C, avec la

quantité d'eau nécessaire, la masse fondue du polyéthylène contenant le composant b), en agitant énergiquement, et on refroidit la dispersion obtenue, tout en continuant d'agiter.

**3.** Utilisation des dispersions selon la revendication 1, pour le traitement de surfaces en verre, en particulier de surfaces en verre présentant des couches d'oxydes métalliques.